# EUROPEAN PATENT APPLICATION

(11) **EP 4 844 360 A1**
(43) Date of publication of application: **25.11.2026**
(21) Application number: 24936855.6
(22) Date of filing: 27.11.2024
(51) Int. Cl.: G01M 7/02

(54) **VIBRATION TEST SYSTEM**

(30) Priority: 26.04.2024 JP 2024072690
(71) Applicant: IMV Corporation, Osaka-shi, Osaka 555-0011 (JP)
(72) Inventor: YAMAMOTO, Koshi, Osaka-shi, Osaka 555-0011 (JP)
(74) Representative: Faggioni, Carlo Maria
(86) International application number: PCT/JP2024/042011
(87) International publication number: WO 2025/225067

(57) **Abstract**

To provide a vibration testing system capable of equalizing vibrations generated by respective vibration generating apparatuses without requiring trial excitation and while simplifying control processing.

A mass-ratio acquisition unit 102 of an overall control device 100 acquires a DC drive current supplied by a drive current application circuit 30a to a drive coil 20a in order to hold a vibration table 24a at a reference position. Similarly, the mass-ratio acquisition unit 102 acquires a DC drive current supplied by a drive current application circuit 30b to a drive coil 20b in order to hold a vibration table 24b at a reference position. A ratio between the DC currents of the respective vibration generating apparatuses is acquired as a mass ratio. A control unit 104 receives a ratio of movable-portion masses from the mass-ratio acquisition unit 102 and, based on the ratio, controls field current application circuits 90a and 90b so that the drive coils 20a and 20b have the same impedance. The control unit 104 of the overall control device 100 further causes the drive current application circuits 30a and 30b to adjust gains of drive currents used for the vibration test in accordance with the adjusted field currents, so that vibrations at the same excitation level, in terms of acceleration, velocity, or displacement, are applied to the vibration tables 24a and 24b.

## Description

### BACKGROUND OF THE INVENTION

### 1. Technical Field

The present invention relates to a vibration testing system for performing a vibration test on a test specimen.

### 2. Related Art

In general, a vibration generator includes an exciter and a power amplifier configured to supply electric power for operating the exciter.

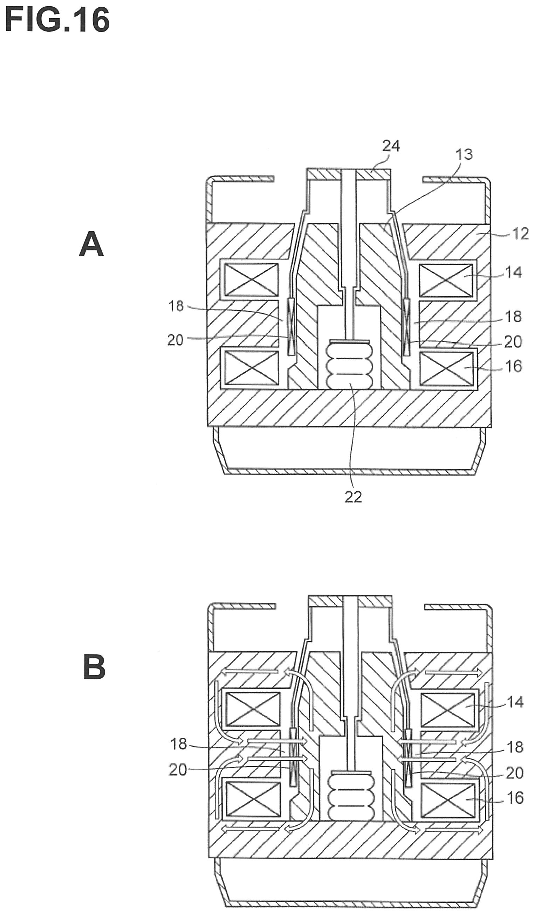

FIG. 16A illustrates a conventional exciter used for vibration testing of a product or the like. Magnetic circuit members 12 and 13 are provided. Field coils 14 and 16 are accommodated in the magnetic circuit member 12. The field coils 14 and 16 form an upper magnetic circuit and a lower magnetic circuit, as illustrated in FIG. 16B. As a result, magnetic flux is generated in a gap 18.

A drive coil 20 is disposed in the gap 18. Therefore, when a drive current for generating a desired vibration is supplied to the drive coil 20, the drive coil 20 can be moved upward and downward. A vibration table 24 is provided above the drive coil 20. Accordingly, the vibration table 24 on which a specimen, namely, a product, is placed can be vibrated upward and downward. The vibration table 24 is supported by an upper support mechanism and a lower support mechanism, which are not illustrated.

When the exciter is used, a specimen is first fixed to the vibration table 24. In this state, air is supplied to an air suspension 22 provided below the vibration table 24, thereby moving the vibration table 24 upward. When the vibration table 24 reaches the midpoint of its maximum vertical stroke, the supply of air to the air suspension 22 is stopped, and a valve, which is not illustrated, is closed. In this manner, the initial setting is completed.

After the vibration table 24 has been raised to the midpoint as described above, drive power for generating a desired vibration is supplied from an amplifier to the drive coil 20, thereby vibrating the vibration table 24 and the specimen.

As the size of a test specimen to be tested increases, a vibration generator having a correspondingly larger vibration table is used.

For an even larger or longer test specimen, a vibration test may be performed by fixing the test specimen to the vibration tables of a plurality of vibration generators (see, for example, Japanese Patent Application Laid-Open Nos. H10-124105 and 2010-54397).

### SUMMARY OF THE INVENTION

However, in a multi-point excitation vibration test in which a test specimen is fixed at a plurality of locations as described above, the vibrations generated by the respective vibration generators must be synchronized. If the vibrations are not synchronized, the desired vibration cannot be applied to the test specimen, thereby impairing the reliability of the vibration test. In addition, if the differences among the vibrations generated by the respective vibration generators are significant, the test specimen may be damaged.

Accordingly, trial excitation has conventionally been performed to obtain the frequency transfer characteristics of the vibrations generated by the respective vibration generators, and the vibration generators have then been controlled based on the frequency transfer characteristics so that their vibrations are synchronized. However, carrying out such trial excitation has been cumbersome.

Further, when trial excitation is performed, a low excitation level at each fixing point can reduce the load applied to the test specimen by the trial excitation, but makes it difficult to obtain valid transfer characteristics. Conversely, increasing the trial excitation level in order to obtain valid transfer characteristics inevitably imposes a certain load on the test specimen before the actual test.

An object of the present invention is to solve the above-described problems and to provide a vibration testing system capable of synchronizing the vibrations generated by the respective vibration generators without requiring trial excitation.

Several independent features of the present invention are set forth below. These features are independent of one another and are not required to be combined, but may be combined in any desired manner.
(1) (2) (3) A vibration testing system for performing a vibration test with a test specimen fixed to vibration tables of a plurality of vibration generating apparatuses according to the present invention, the vibration testing system comprises the plurality of vibration generating apparatuses and an overall control device,
each of the vibration generating apparatuses comprising: a magnetic-flux generation source configured to generate magnetic flux using an field current; a drive current application circuit configured to acquire a drive signal, amplify the drive signal at a predetermined amplification factor, and output a drive current; a drive coil disposed in the magnetic flux generated by the magnetic-flux generation source and configured to be driven by the drive current; and a vibration table configured to be driven by a driving force of the drive coil and to have the test specimen fixed thereto, and
the overall control device comprising: mass-ratio acquisition means for acquiring, for each of the vibration generating apparatuses, a mass ratio of a movable portion including the vibration table to which the test specimen is fixed; and control means for controlling, based on the mass ratio for each of the vibration generating apparatuses, the field current and the amplification factor of the drive current application circuit of each of the vibration generating apparatuses such that vibrations generated by the respective vibration generating apparatuses approach one another.

Accordingly, in a vibration test performed with a test specimen fixed to a plurality of vibration generating apparatuses, the vibrations generated by the respective vibration generating apparatuses can be equalized.

(4) The system according to the present invention, in an initial state, the mass-ratio acquisition means supplies a DC current to the drive coil as the drive current so as to maintain the vibration table at a reference position, and calculates the mass ratio based on a value of the DC current.

Accordingly, since the mass ratio is acquired based on the DC currents used to maintain the vibration tables at their respective reference positions, it is unnecessary to perform a separate process for acquiring the mass ratio.

(5) The system according to the present invention, the mass-ratio acquisition means acquires the mass ratio by calculating the mass ratio based on a shape and a mass of the test specimen, or by receiving the mass ratio as an external input.

Accordingly, the mass ratio can be calculated based on the shape and other characteristics of the test specimen, or can be obtained through an external input.

(6) The system according to the present invention, each of the vibration generating apparatuses further comprises a short-circuit switch configured to short-circuit both ends of the drive coil upon detection of an abnormal condition.

Accordingly, in the event of an abnormality or the like, a sudden fall of the vibration table can be prevented by a counter-electromotive force.

(7) A vibration testing method for performing a vibration test with a test specimen fixed to vibration tables of a plurality of vibration generating apparatuses according to the present invention, the method comprises: acquiring, for each of the vibration generating apparatuses, a mass ratio of a movable portion including the vibration table to which the test specimen is fixed; and controlling, based on the mass ratio for each of the vibration generating apparatuses, an field current and an amplification factor of a drive current application circuit of each of the vibration generating apparatuses such that vibrations generated by the respective vibration generating apparatuses approach one another.

Accordingly, in a vibration test performed with a test specimen fixed to a plurality of vibration generating apparatuses, the vibrations generated by the respective vibration generating apparatuses can be equalized.

In the embodiment, step S105 corresponds to the "mass-ratio acquisition means."

In the embodiment, steps S107 and S109 correspond to the "control means."

The term "apparatus" is a concept that includes not only an apparatus including one computer but also an apparatus including a plurality of the computers connected via a network or the like. Thus, in the case where the means (or may be a portion of the means) in the present invention is divided into the plurality of the computers, these plural computers correspond to the apparatus.

The "program" is a concept that includes not only a program directly executable by a CPU but also a source-format program, a compressed program, an encrypted program, a program working with an operating system to implement a function thereof, and the like.

### BRIEF DESCRIPTION OF THE DRAWINGS

FIG. 1 is a functional block diagram of a vibration testing system according to an embodiment of the present invention.
FIG. 2 is a diagram illustrating the structure of an exciter 1.
FIG. 3 is a diagram illustrating the structure of a vibration table 24.
FIG. 4 is a diagram illustrating magnetic circuit members of the exciter 1.
FIG. 5A is a diagram illustrating a state in which the vibration table is incorporated into the magnetic circuit members.
FIG. 5B is a diagram illustrating a state in which the vibration table is incorporated into the magnetic circuit members.
FIG. 6 is a diagram illustrating a system configuration of the vibration testing system.
FIG. 7 is a diagram illustrating a configuration of a drive-current application circuit 30.
FIG. 8 is a diagram illustrating a configuration of an field current application circuit 90.
FIG. 9 is a diagram illustrating a hardware configuration of an overall control device 100.
FIG. 10 is a flowchart of an overall control program 160.
FIG. 11 illustrates an example of a correspondence table.
FIG. 12 illustrates data indicating operating results of the vibration testing system.
FIG. 13 is a diagram for explaining a function obtained when a drive coil 20 is short-circuited by a switch 72.
FIG. 14 is a diagram illustrating a mechanism for preventing a fall by means of an air cylinder 80.
FIG. 15 is a diagram illustrating the mechanism for preventing a fall by means of the air cylinder 80.
FIG. 16 is a diagram illustrating a conventional vibration generator.

### DESCRIPTION OF EMBODIMENTS

### 1. Functional Configuration

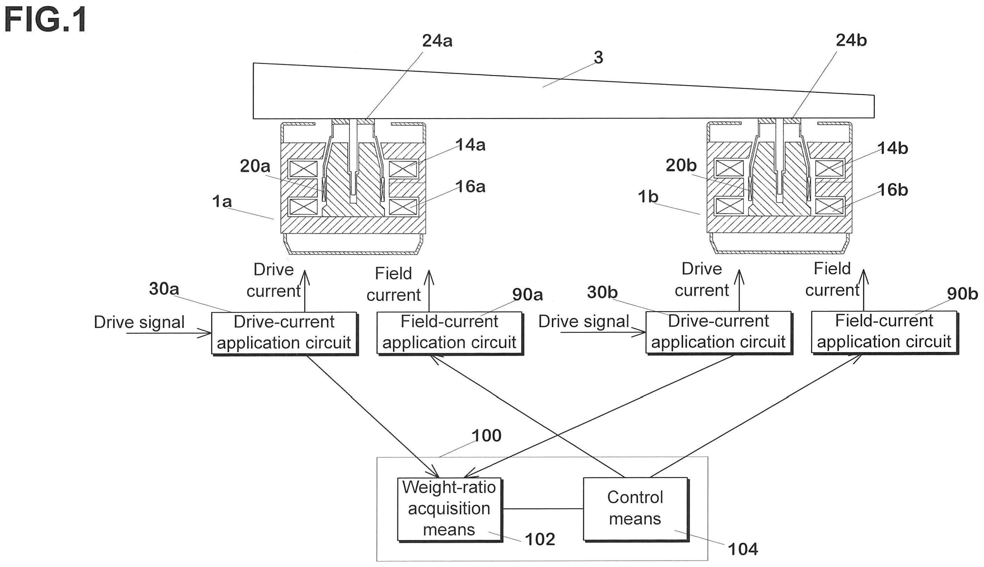

FIG. 1 illustrates a functional configuration of a vibration testing system according to an embodiment of the present invention. In the present embodiment, two exciters 1a and 1b having the same characteristics are used. The exciter 1a is provided with field coils 14a and 16a, which generate magnetic flux in response to an field current supplied from an field current application circuit 90a. A drive coil 20a is disposed in the magnetic flux and is driven by a drive current supplied from a drive-current application circuit 30a, thereby vibrating a vibration table 24a. The exciter 1a, together with the drive-current application circuit 30a, the field current application circuit 90a, and the like, constitutes a vibration generator. The exciter 1b has a similar configuration.

A test specimen 3 is fixed to the vibration table 24a of the exciter 1a and the vibration table 24b of the exciter 1b. Since the weight distribution of the test specimen 3 is nonuniform, the load applied to the vibration table 24a and the load applied to the vibration table 24b are not equal.

An overall control device 100 is connected to each vibration generator, namely, the exciter 1a and the exciter 1b. Mass ratio acquisition means 102 of the overall control device 100 acquires a direct current supplied to the drive coil 20a by the drive-current application circuit 30a in order to hold the vibration table 24a at a reference position. Similarly, the mass ratio acquisition means 102 acquires a direct current supplied to the drive coil 20b by the drive-current application circuit 30b in order to hold the vibration table 24b at the reference position. The ratio between the direct currents of the respective vibration generators is acquired as a mass ratio.

Control means 104 receives, from the mass ratio acquisition means 102, a ratio between the loaded movable-part weights of the exciters 1a and 1b. Each loaded movable-part weight is the sum of the load applied to the vibration table when the test specimen is fixed thereto and the weights of the vibration table, the drive coil, and the like. Based on the received ratio, the control means 104 controls the field current application circuits 90a and 90b so that the impedances of the drive coils 20a and 20b become equal.

The impedances of the drive coils 20a and 20b are functions of the movable-part weight, the field current, and the like. Accordingly, once the mass ratio is known, the field currents can be controlled based on a functional relationship so as to equalize the impedances and thereby cause the vibration tables 24a and 24b to generate vibrations at the same excitation level, such as acceleration, velocity, or displacement.

However, the excitation level is a function not only of the field current but also of the drive current. Therefore, the control means 104 of the overall control device 100 adjusts the gains of the drive currents used for the vibration test in accordance with the mass ratio so that vibrations at the same excitation level are applied to the vibration tables 24a and 24b.

As described above, the vibration tables are held at their respective reference positions by direct drive currents, the ratio between the loads applied to the plurality of exciters is measured, and the field currents and the drive currents are controlled in accordance with the load ratio. Accordingly, the vibrations generated by the plurality of exciters can be synchronized.

### 2. Structure of Vibration Generator

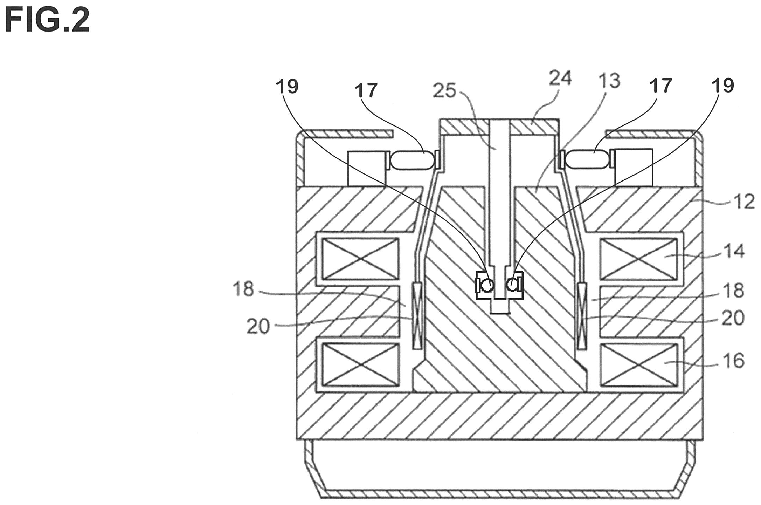

FIG. 2 is a cross-sectional view illustrating the structures of the exciters 1a and 1b. In the present embodiment, the exciters 1a and 1b have the same structure and characteristics. Accordingly, in the following description, the exciters 1a and 1b are collectively referred to as the exciter 1 without distinction. Thus, for example, the field coils denoted by reference numerals 14 and 16 correspond to the field coils 14a and 16a in the exciter 1a and to the field coils 14b and 16b in the exciter 1b. The same applies to the other components.

The vibration exciter 1 is provided with magnetic circuit members 12 and 13. Field coils 14 and 16 are accommodated in the magnetic circuit member 12. The field coils 14 and 16 generate a magnetic flux in a gap 18.

The drive coil 20 is disposed in the gap 18. Accordingly, when a drive current for generating desired vibration is supplied to the drive coil 20, the drive coil 20 can be moved upward and downward. A vibration table 24 is provided above the drive coil 20. Therefore, the vibration table 24, on which a specimen serving as a product is placed, can be vibrated upward and downward. The vibration table 24 is provided with a shaft 25 for stabilizing its vertical movement. The vibration table 24 is also supported by an upper support mechanism 17 and a lower support mechanism 19.

In this embodiment, the air suspension 22 is not provided. Accordingly, no cavity for accommodating the air suspension 22 is required, and the space that would otherwise form such a cavity can be filled with a magnetic material. As a result, high magnetic efficiency can be achieved.

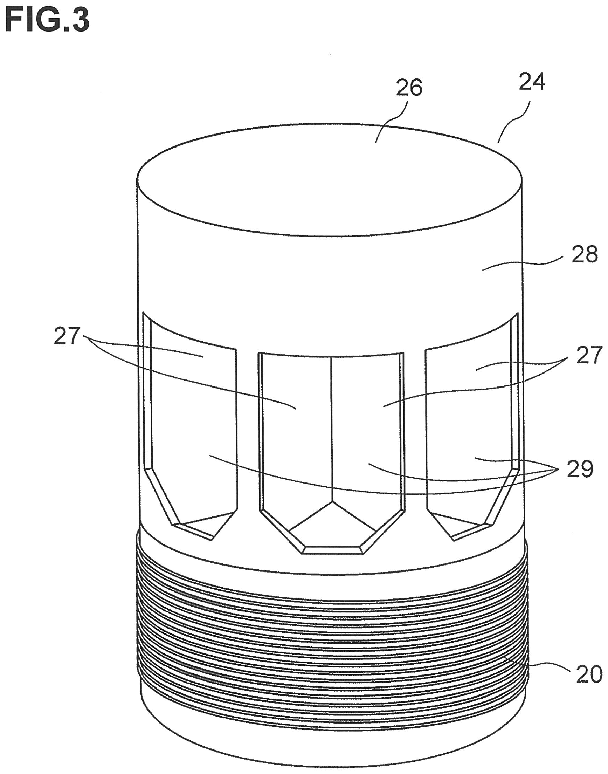

FIG. 3 illustrates the configuration of the vibration table 24. The vibration table 24 includes a substantially cylindrical housing 28 as a whole and a table 26 provided at an upper portion thereof for fixing a test specimen.

A support plate 27 extending radially from the shaft 25 is provided below the table 26. The support plate 27 is fixed to the shaft 25 and the housing 28. Openings 29 are formed in the housing 28, except in regions for fixing the support plate 27.

A lower portion thereof remains cylindrical, and the drive coil 20 is wound around the outer circumference thereof.

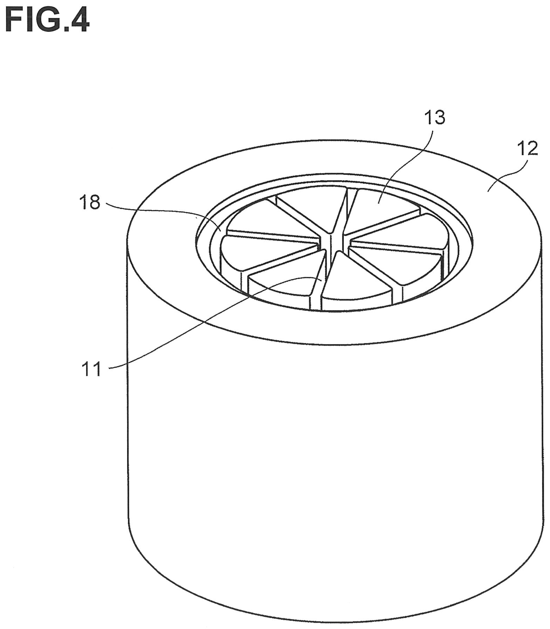

FIG. 4 illustrates the configurations of the magnetic members 12 and 13. The magnetic member 12 is formed in a cylindrical shape having a bottom, and the magnetic member 13 is provided at a central portion thereof. The magnetic member 13 is composed of a predetermined number of triangular prisms (eight in this embodiment), which are arranged with predetermined gaps 11 therebetween. A gap 18 is provided between the outer magnetic member 12 and the inner magnetic member 13. The cylindrical portion of the vibration table 24 shown in FIG. 3 is inserted into the gap 18.

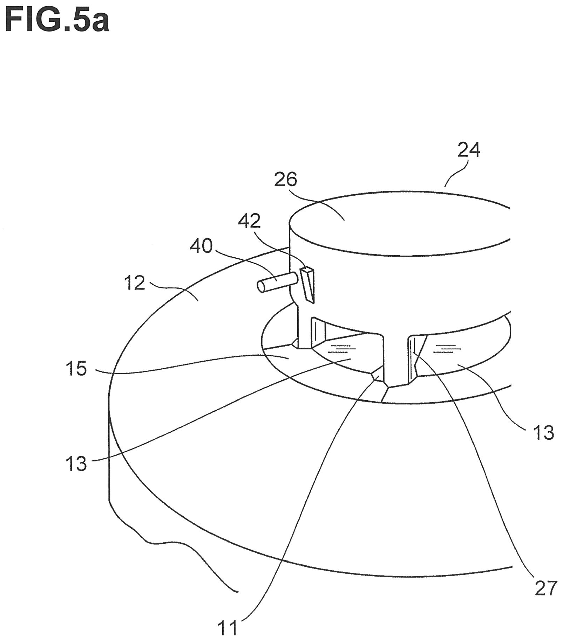

FIG. 5A illustrates a state in which the vibration table 24 is inserted into the gap 18 between the magnetic members 12 and 13. The cylindrical portion of the housing 28 of the vibration table 24 is inserted into the gap 18, and the support plates 27 of the vibration table 24 are inserted into the gaps 11. After the insertion, auxiliary magnetic members 15 are inserted between the magnetic member 12 and the magnetic member 13.

A (metallic) target 42 for the displacement sensor is provided on a side surface of the table 26. An eddy-current displacement sensor 40 is provided so as to face the target 42. The target 42 is shaped such that the height of a portion thereof facing the displacement sensor 40 changes in accordance with the vertical movement of the vibration table 24. Accordingly, the displacement sensor 40 can detect the vertical position of the vibration table 24.

### 3. System Configuration and Hardware Configuration

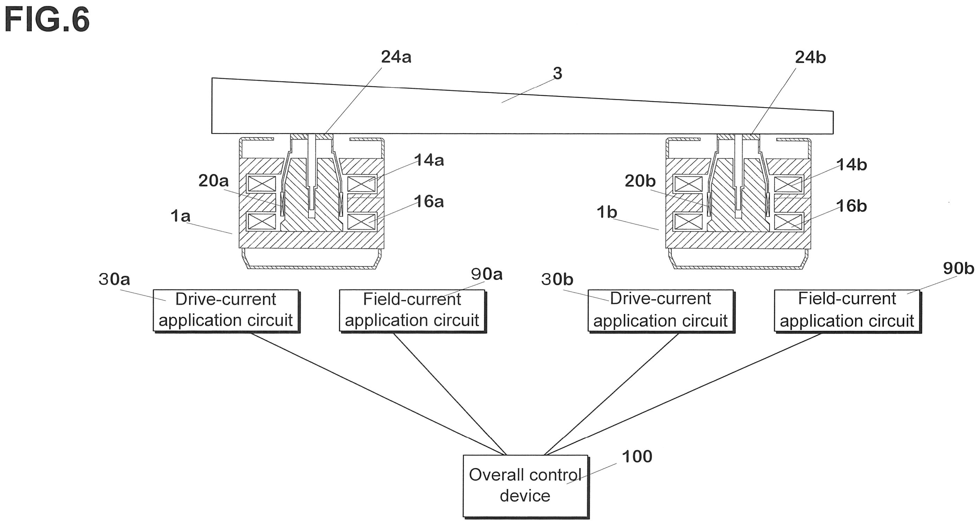

FIG. 6 illustrates the system configuration of drive current application circuits 30a and 30b, field current application circuits 90a and 90b, and an overall control device 100. The overall control device 100 controls the drive current application circuits 30a and 30b and the field current application circuits 90a and 90b.

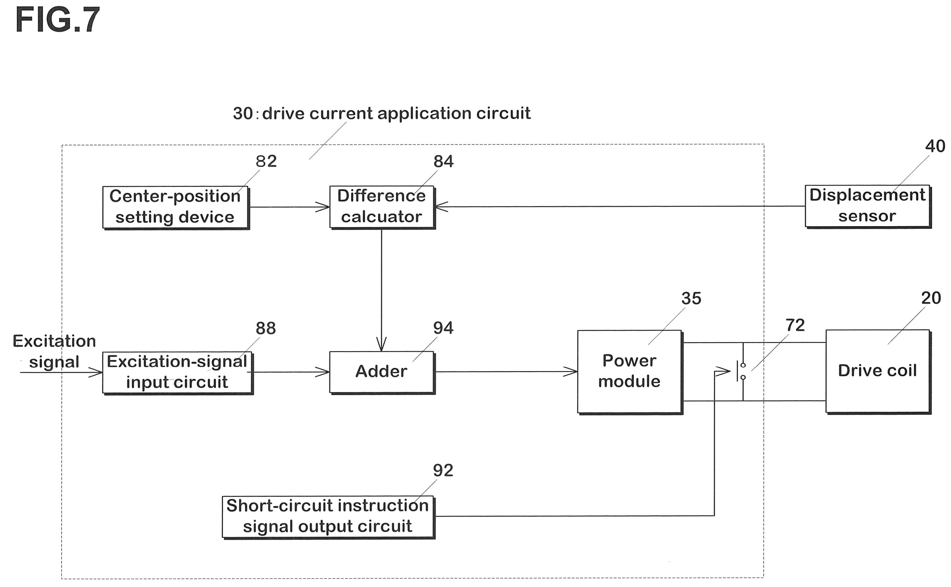

FIG. 7 illustrates the configuration of the drive current application circuit 30. Since the drive current application circuits 30a and 30b have the same configuration, they will be described collectively as the drive current application circuit 30. The operation of the drive current application circuit 30 can be controlled by the overall control device 100.

The center position setting device 82 includes an operating unit for determining the center position of the vibration table 24, that is, the initial position thereof when no excitation signal is applied. When an operator operates the operating unit, the voltage output from the center position setting device 82 changes. A feedback loop including a difference calculator 84, an adder 94, a power module 35, the drive coil 20, and the displacement sensor 40 maintains the vibration table 24 at a position corresponding to the voltage.

The excitation signal input circuit 88 receives an excitation signal and supplies the excitation signal to the power module 35, thereby supplying a drive current to the drive coil 20.

In this embodiment, a switch 72 for short-circuiting both ends of the drive coil 20 is provided. The function of the switch 72 will be described later.

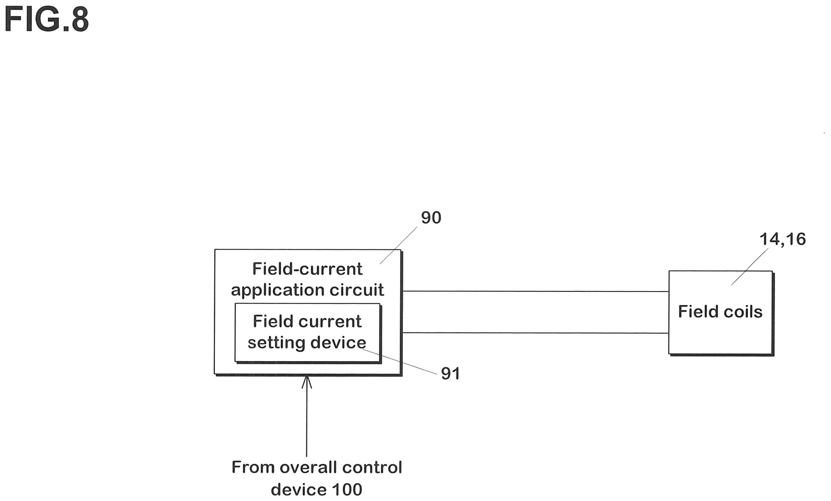

FIG. 8 illustrates the configuration of the field current application circuit 90. Since the field current application circuits 90a and 90b have the same configuration, they will be described collectively as the field current application circuit 90. The operation of the field current application circuit 90 can be controlled by the overall control device 100.

The output of the field current application circuit 90 is supplied to the field coils 14 and 16 as an field current. The magnitude of the field current can be set by an field current setting device 91.

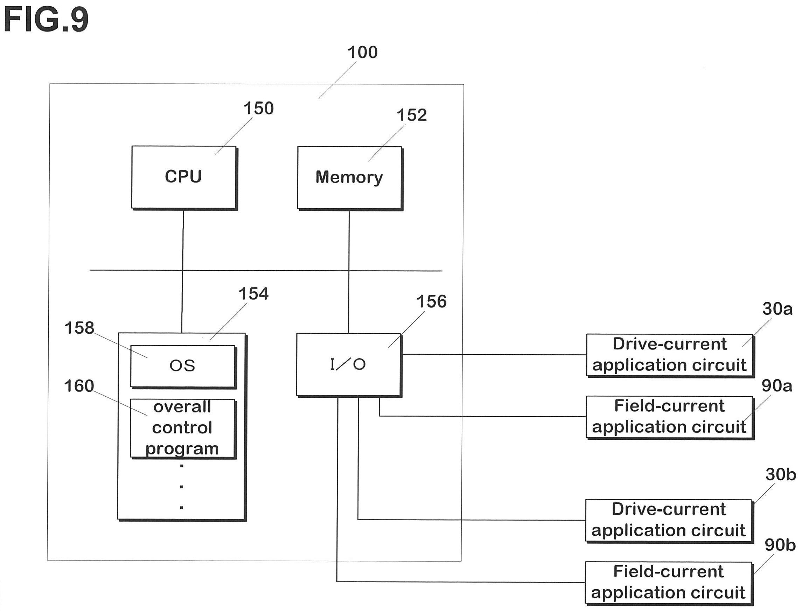

FIG. 9 illustrates the hardware configuration of the overall control device 100. A memory 152, an SSD 154, and an I/O port 156 are connected to a CPU 150. Through the I/O port 156, the CPU 150 can control the drive current application circuit 30a and the field current application circuit 90a of the vibration exciter 1a, and can also control the drive current application circuit 30b and the field current application circuit 90b of the vibration exciter 1b.

An operating system 158 and an overall control program 160 are stored in the SSD 154. The overall control program 160 performs its functions in cooperation with the operating system 158.

### 4. Control Processing

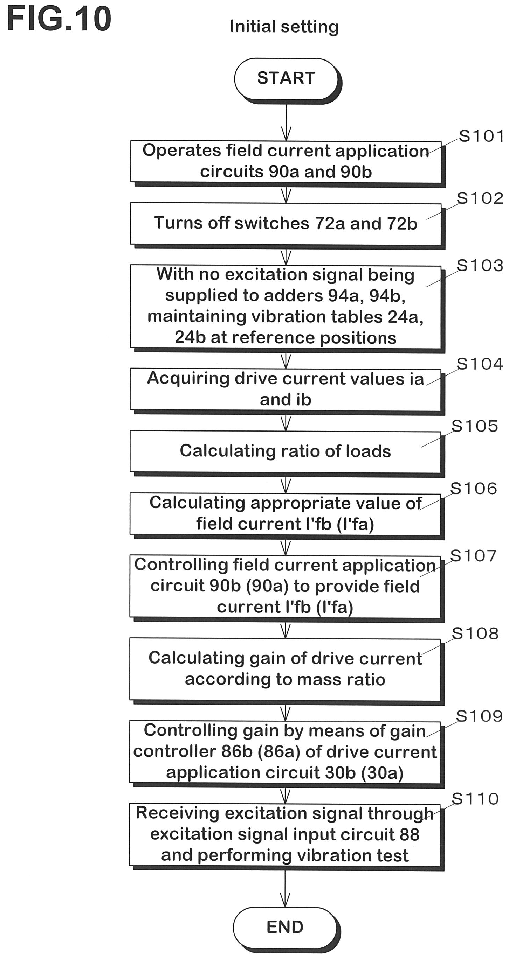

FIG. 10 is a flowchart of the overall control program 160. The CPU 150 operates the field current application circuits 90a and 90b. As a result, a rated field current Ifa is supplied to the field coils 14a and 16a of the vibration exciter 1a, and a rated field current Ifb is supplied to the field coils 14b and 16b of the vibration exciter 1b. Subsequently, the CPU 150 turns off the switches 72a and 72b (step S102). Furthermore, the CPU 150 causes a DC drive signal to be supplied to the drive coils 20 while no excitation signal is supplied to the adders 94a and 94b (step S103).

The operator can determine the center position of the vibration table 24, that is, the initial position when no excitation signal is applied, by operating the center position setting device 82 shown in FIG. 7. The difference calculator 84, which includes an operational amplifier or the like, calculates a difference between the output of the displacement sensor 40, namely, the position of the vibration table 24, and the center position determined by the center position setting device 82. The difference is supplied to the adder 94 and then to the power module 35, thereby changing the drive current and moving the vibration table 24 upward or downward. The output of the displacement sensor 40 changes in accordance with the vertical position of the vibration table 24, and consequently, the difference output from the difference calculator 84 also changes.

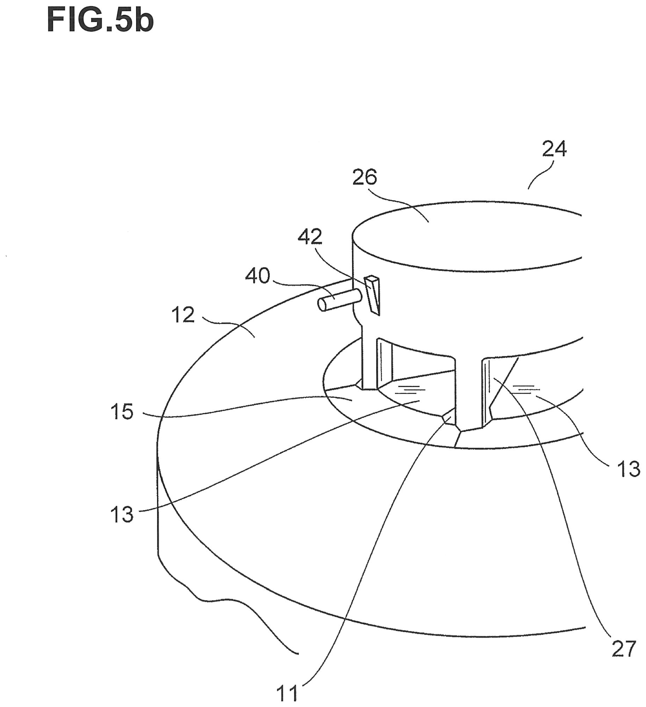

Accordingly, the vibration table 24 is maintained at the center position set by the center position setting device 82 (see FIG. 5B) by a feedback circuit including the displacement sensor 40, the difference calculator 84, and the drive coil 20.

Subsequently, the CPU 150 acquires drive current values ia and ib while the vibration tables 24a and 24b are held at the reference positions (step S104). For example, the drive current values ia and ib may be acquired by providing an ammeter at the output of the power module 35. The drive current values ia and ib vary depending on the loads applied to the vibration tables 24a and 24b. In this case, since the load of the test specimen 3 is distributed differently between the vibration tables 24a and 24b, the drive current values ia and ib also differ from each other.

The CPU 150 calculates the ratio of the loads applied to the vibration tables 24a and 24b based on the drive current values described above, that is, the DC currents for holding the vibration tables 24a and 24b at the reference positions (step S105). The calculation method is as follows.

Let the mass of the vibration table 24 be m [kg], the force factor of the vibration exciter be Bl [N/A], the drive current supplied thereto be I [A] (peak value), and the acceleration at which the vibration table 24 is excited be a [m/s²]. When the excitation force generated by the vibration exciter at that time is F [N], the following relationship holds: $F = m * a = Bl * I$ (1)

It is assumed that F, a, and I are rated values of the vibration exciter and are known.

When a test specimen having a mass of M [kg] is fixed to the vibration table 24 and the vibration table 24 is held at the reference position by supplying a DC current Idc, the following relationship can be expressed in the same manner as above, assuming that the gravitational acceleration is 9.8 [m/s²]: $Fdc = \left(m+M\right) * 9.8 = Bl * Idc$ (2)

From equations (1) and (2), the mass M of the test specimen can be obtained as follows: $M = \left(Idc/I*a/9.8-1\right) * m$

Here, the mass of the movable portion of the vibration exciter 1a under load is defined as md+ma. In this expression, md represents the mass of the vibration table to which the drive coil is fixed, and ma represents the mounted mass. In other words, the load ma applied to the vibration table when the test specimen is fixed thereto and the mass md of the vibration table. Similarly, the mass of the movable portion of the vibration exciter 1b under load is defined as md+mb. In this expression, md represents the mass of the vibration table to which the drive coil is fixed, and mb represents the mounted mass. In other words, the load mb applied to the vibration table when the test specimen is fixed thereto and the mass md of the vibration table.

The impedances Za and Zb of the drive coils 20a and 20b of the vibration exciters 1a and 1b are expressed by the following equations. Let R denote the resistance of each drive coil, L denote the inductance thereof, and Bl denote the force factor, where B is the magnetic flux density at the drive coil portion and l is the length of the drive coil. $Za = R + jωL + \left(Bl\right) 2 / jω \left(md+ma\right)$ $Zb = R + jωL + \left(Bl\right) 2 / jω \left(md+mb\right)$

As described above, in the vibration exciters 1a and 1b, the masses md+ma and md+mb of the movable portions under load differ from each other. Therefore, even when the same drive signal is supplied to the vibration exciters 1a and 1b, the two vibration exciters do not produce the same vibration.

In order to produce the same vibration, the impedances Za and Zb of the drive coils 20a and 20b must be made equal. Therefore, in this embodiment, the force factor Bl is adjusted so that the impedances Za and Zb become equal to each other.

Here, consider a case where md+ma is greater than md+mb. Since the force factor Bl of the vibration exciter 1a is determined by the rated field current, the field current cannot be increased beyond the rated field current. Accordingly, the adjustment is performed by reducing the force factor Bl of the vibration exciter 1b.

Here, when the reduced force factor is denoted by Bl', the adjustment may be made so as to satisfy the following relationship: $Bl ′ = Bl \times {\left(\left(md+mb\right)/\left(md+ma\right)\right)}^{1 / 2}$

The relationship between the field current If and the force factor Bl is expressed by the following approximate equation obtained from measured values: $Bl = c 5 \times {If}^{5} + c 4 \times {If}^{4} + c 3 \times {If}^{3} + c 2 \times {If}^{2} + c 1 \times If$

Accordingly, based on equation (3), an field current If' that provides the force factor Bl' is calculated (step S106).

Alternatively, Bl' may be calculated as follows.

Let the excitation forces be Fa and Fb, respectively; the force factor be Bl; the acceleration be a; the mounted masses be ma and mb, respectively; the mass of the vibration table be md; and the center-position holding currents be Ia and Ib, respectively. The following relationships hold: $Fa = \left(ma+md\right) \times 9.8 = Bl \times Ia$ $Fb = \left(mb+md\right) \times 9.8 = Bl \times Ib$

Accordingly, taking the ratio of the respective values gives: $Fa / Fb = \left(ma+md\right) / \left(mb+md\right) = Ia / Ib$

Thus, the mass ratio can be replaced with the ratio of the DC currents used to hold the vibration tables at their respective positions.

The force factor Bl' can be calculated as follows: $Bl ′ = Bl \times {\left(\left(md+mb\right)/\left(md+ma\right)\right)}^{1 / 2} = Bl \times {\left(Ib/Ia\right)}^{1 / 2}$ (4)

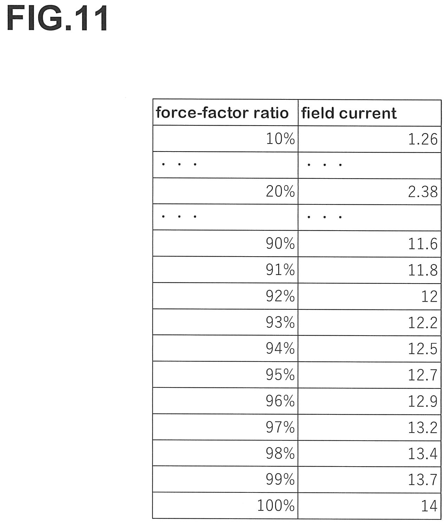

The field current If' corresponding to Bl' may be calculated by defining Bl'/Bl as a force-factor ratio and referring to a correspondence table between force-factor ratios and field currents, the correspondence table being prepared in advance for each model of vibration exciter. FIG. 11 illustrates an example of the correspondence table.

The CPU 150 controls the field current application circuit 90b of the vibration exciter 1b and controls the field current setting device 91 such that the field current becomes the field current If'b calculated above (step S107). The field current application circuit 90a of the vibration exciter 1a is controlled to output the rated field current Ifa, that is, 100% of the rated value.

When the drive currents of the vibration exciters 1a and 1b are denoted by ia and ib, respectively, and the acceleration is denoted by A, the excitation forces Fa and Fb of the vibration exciters 1a and 1b are expressed by the following equations. $Fa = A \times \left(md+ma\right) = Bl \times ia$ $Fb = A \times \left(md+mb\right) = Bl ′ \times ib$

Taking the ratio of the equations for the vibration exciters 1a and 1b in the middle and right-hand sides gives: $\left(md+mb\right) / \left(md+ma\right) = Bl ′ / Bl \times ib / ia$

Solving for ib/ia gives: $ib / ia = \left(md+mb\right) / \left(md+ma\right) \times Bl / Bl ′$

Substituting $Bl ′ = {\left(\left(md+mb\right)/\left(md+ma\right)\right)}^{1 / 2} \times Bl$ from equation (4) into the above equation and rearranging gives: $ib / ia = {\left(\left(md+mb\right)/\left(md+ma\right)\right)}^{1 / 2}$

Accordingly, when ia is a current corresponding to a gain of 100%, ib may be set to the level represented by the right-hand side of the above equation.

Accordingly, in order for the equality on the right-hand side to hold, ib must be adjusted in accordance with the adjustment of Bl to Bl'.

Assuming that the gain of the excitation signal input circuit 88a of the drive current application circuit 30a for the vibration exciter 1a is 100%, the gain Gain_b of the excitation signal input circuit 88b of the drive current application circuit 30b for the vibration exciter 1b is determined as follows. $Gain_b = {\left(Ib/Ia\right)}^{1 / 2} \times 100 %$

The CPU 150 calculates Gain_b in the manner described above (step S108), supplies the calculated Gain_b to the excitation signal input circuit 88b, and controls the gain thereof (step S109).

The CPU 150 then receives an excitation signal through the excitation signal input circuits 88 and performs a vibration test. In this manner, uniform vibration can be applied even to the test specimen 3 having an uneven weight distribution.

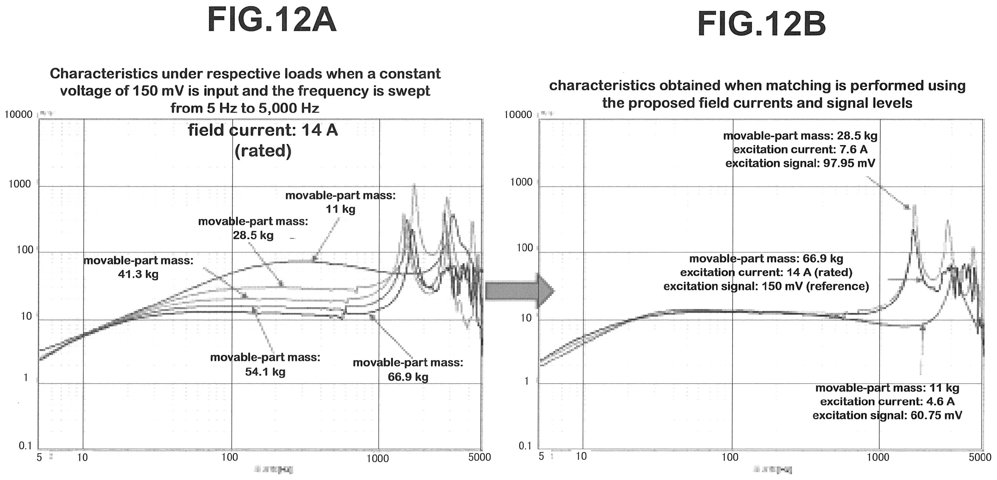

FIG. 12A shows the frequency characteristics of acceleration when vibration is applied under different load conditions. It can be seen that the frequency characteristics vary significantly depending on the load. FIG. 12B shows the frequency characteristics obtained when the field current and the gain of the drive current are adjusted according to the load as described above. It can be seen that, except in the high-frequency range, the characteristics substantially coincide with each other.

When control is stopped, for example, due to the occurrence of a system abnormality or the completion of a vibration test, the vibration table 24 may fall, thereby applying unintended vibration to the test specimen.

Therefore, in this embodiment, each vibration exciter 1 is provided with the switch 72. The short-circuit instruction signal output circuit 92 outputs a short-circuit instruction signal when it receives a stop signal from the vibration control circuit; when it receives, from the vibration exciter, a signal indicating an abnormal condition, such as when a drive current exceeding a limit value is output, when the vibration table 24 vibrates beyond a predetermined limit, or when an abnormality occurs in the power supply; or when it receives an emergency stop signal generated by an operator's operation from a constant-temperature chamber or the like.

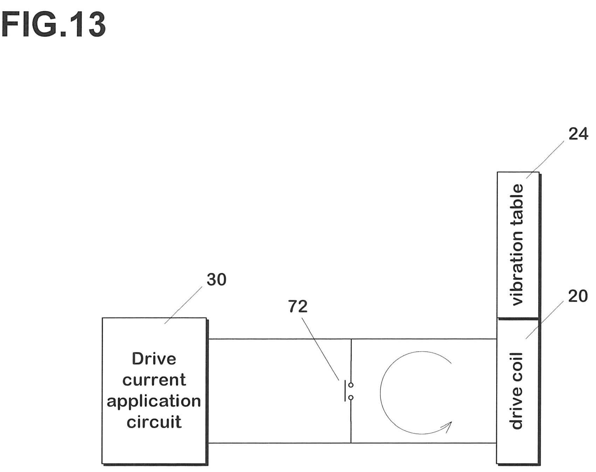

When the short-circuit instruction signal is supplied to the switch 72, the switch 72 is turned on. If a static magnetic field is generated by the field coils 14 and 16, the downward movement of the drive coil 20 together with the vibration table 24 induces a current in the drive coil 20, as shown in FIG. 13. The induced current generates a driving force in a direction opposing the downward movement. Consequently, the downward movement of the vibration table 24 is braked, allowing the vibration table 24 to be lowered gently.

In the event of a power failure or the like, electric power is no longer supplied to the field coils 14 and 16 for generating the static magnetic field. However, due to the inductive nature of the field coils 14 and 16, the magnetic flux does not change abruptly even when the supply of electric power is interrupted, and the static magnetic field remains for approximately the period during which the above-described braking action is required. Therefore, even when the field current is no longer supplied due to a power failure, the vibration table 24 can be braked in the same manner.

It is also preferable that the switch 72 be configured to turn on when the drive current application circuit 30 stops operating due to loss of power. For example, a switch may be used whose normal position is the on position and which is maintained in the off position only while a signal is supplied from the drive current application circuit 30. In this case, when the drive current application circuit 30 stops operating, the switch 72 returns to its normal on position.

### 5. Modifications (Other Examples)

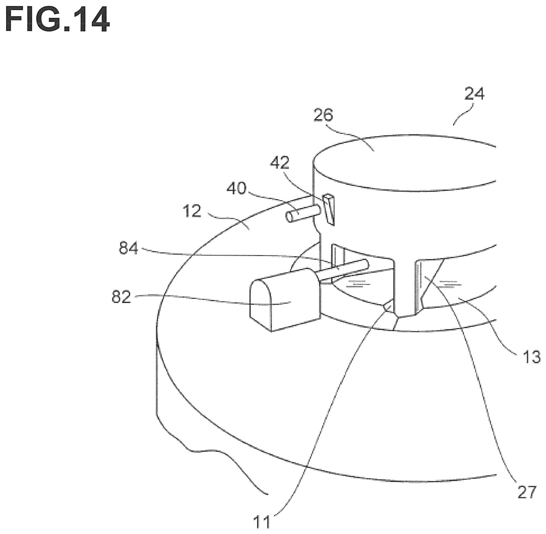

(1) In the embodiment described above, a vibration test is performed with the test specimen 3 supported by two vibration exciters. However, the present configuration is similarly applicable when three or more vibration exciters are used. In this case, the vibration exciter having the greatest movable-portion mass may be used as a reference, and the field currents and drive currents of the other vibration exciters may be adjusted accordingly.
(2) In the embodiment described above, adjustment is performed by changing the field current and the drive-current gain of one of the vibration exciters. However, the field currents and the drive-current gains of both vibration exciters may be changed.
(3) In the embodiment described above, the control section of the drive current application circuit 30 is implemented by hardware logic. However, the control section may instead be implemented by a CPU executing a control program.
(4) In the embodiment described above, the ratio of the DC currents is used as the mass ratio. However, the respective masses may be calculated based on the DC currents, and a mass ratio may then be calculated and used. In other words, the mass ratio itself may be used directly, or an index indirectly representing the mass ratio may be used.
(5) In the embodiment described above, the CPU 150 calculates the mass ratio based on the values of the DC currents used to hold the vibration tables 24 at their respective reference positions. However, an operator may calculate the mass ratio based on the DC current values and input the calculated mass ratio to the CPU 150 using a keyboard or the like.
   Alternatively, a weighing device may be placed in advance at the position of the vibration table 24 of each vibration exciter 1, the test specimen 3 may be placed thereon, and the respective loads may be measured to calculate the mass ratio. As another alternative, the load applied to the vibration table 24 of each vibration exciter 1 may be calculated based on the shape of the test specimen 3, and the mass ratio may be calculated from the calculated loads.
(6) In the embodiment described above, both ends of the drive coil 20 are short-circuited by the switch 72, which is a short-circuit switch, so that a counter electromotive force is generated during downward movement and acts as a brake. However, instead of or in addition to this configuration, an air cylinder 82 may be provided as a fall-prevention mechanism, as shown in FIG. 14. Upon receiving a stop signal, the drive current application circuit 30 causes a rod 84 of the air cylinder 82 to project, thereby preventing the vibration table 24 from falling. In FIG. 14, the rod 84 indicated by a broken line is in the projected state. It is preferable to provide a plurality of air cylinders 82.

During normal operation, the rod 84 of the air cylinder 82 is retracted so as not to interfere with vibration. Upon receiving a stop signal, the CPU 50 causes the rod 84 of the air cylinder 82 to project. This prevents the vibration table 24 from falling abruptly.

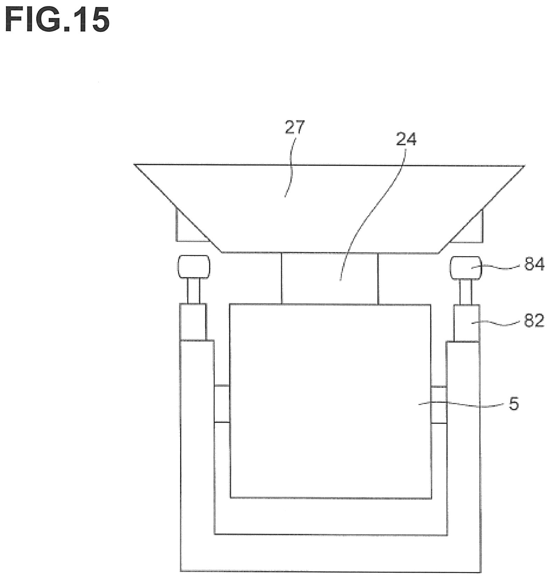

Further, when an auxiliary table 27 is provided on the vibration table 24 as shown in FIG. 15, the air cylinder 82 serving as the fall-prevention mechanism may be provided below the auxiliary table 27.

(7) In the embodiment described above, the center point of the vertical movable range of the vibration table is used as the reference position. However, a position below or above the center point may instead be used as the reference position.

(8) In the embodiment described above, the eddy-current displacement sensor 40 is used to detect the position of the vibration table 24. However, another type of displacement sensor, such as a laser displacement sensor, may be used.

(9) In the embodiment described above, no air suspension is provided. However, an air suspension may be provided as in the conventional configuration. During normal operation, the air suspension may be kept open and disabled. In an emergency, such as upon receipt of a stop signal, the air suspension may be activated by closing a discharge valve and supplying air thereto, thereby preventing the vibration table from falling. In this case, since the air suspension is used solely for fall prevention, precise adjustment or control is unnecessary.

(10) In the embodiment described above, the vibration table is held at the reference position by applying a DC drive current, and the mass ratio is calculated based on the drive current. However, a conventional vibration generating apparatus as shown in FIG. 16 may be used, the mass ratio may be calculated by another method, and the field current and the drive-current gain may be controlled in the same manner based on the calculated mass ratio.

(11) In the embodiment described above, the overall control device 100 calculates the field current and the drive-current gain and controls the field current application circuit 90 and the drive current application circuit 30 of each vibration exciter 1. However, some or all of these operations may be performed manually by an operator.

For example, the field current and the drive-current gain calculated by the overall control device 100 may be displayed or printed, and an operator may manually adjust the field current and the drive-current gain of each vibration exciter 1 based on the displayed or printed values.

Alternatively, an operator may calculate the field current and the drive-current gain based on the mass ratio and manually adjust the field current and the drive-current gain of each vibration exciter 1**.**

(12) In the embodiment described above, the center position is set by an operator operating the center position setting device 82 of the vibration exciter 1**.** However, the vibration exciter 1 may set the center position based on an instruction value received from an external device, such as the overall control device 100.

(13) In the embodiment described above, the characteristics are generally matched except in the high-frequency range. However, when it is also desired to match the characteristics in the high-frequency range, the following configuration may be employed. A controller is provided for each vibration exciter 1, and excitation signals are supplied synchronously to the drive current application circuits 30 of the respective vibration exciters 1. A frequency transfer characteristic is calculated based on the output of an acceleration sensor provided on the test specimen and the excitation signal, and control is performed such that the frequency characteristic of the target excitation signal matches the frequency characteristic of the output of the acceleration sensor. In this manner, the characteristics in the high-frequency range can also be matched.

In this case, the control by the controllers may be performed during actual excitation, that is, during a test using the excitation signal, without first performing trial excitation. This is because the characteristics have already been matched in the low-frequency range, and therefore differences in vibration do not occur in the low-frequency range where there is a risk of damaging the test specimen.

(14) The embodiment described above and the modifications thereof may be implemented in any combination with one another.

## Claims

1. A vibration testing system for performing a vibration test with a test specimen fixed to vibration tables of a plurality of vibration generating apparatuses, the vibration testing system comprising the plurality of vibration generating apparatuses and an overall control device,
each of the vibration generating apparatuses comprising:
a magnetic-flux generation source configured to generate magnetic flux using an field current;
a drive current application circuit configured to acquire a drive signal, amplify the drive signal at a predetermined amplification factor, and output a drive current;
a drive coil disposed in the magnetic flux generated by the magnetic-flux generation source and configured to be driven by the drive current; and
a vibration table configured to be driven by a driving force of the drive coil and to have the test specimen fixed thereto, and
the overall control device comprising:
mass ratio acquisition means for acquiring, for each of the vibration generating apparatuses, a mass ratio of a movable portion including the vibration table to which the test specimen is fixed; and
control means for controlling, based on the mass ratio for each of the vibration generating apparatuses, the field current and the amplification factor of the drive current application circuit of each of the vibration generating apparatuses such that vibrations generated by the respective vibration generating apparatuses approach one another.

2. An overall control device for use in a vibration testing system for performing a vibration test with a test specimen fixed to vibration tables of a plurality of vibration generating apparatuses, the overall control device comprising:
mass ratio acquisition means for acquiring, for each of the vibration generating apparatuses, a mass ratio of a movable portion including the vibration table to which the test specimen is fixed; and
control means for controlling, based on the mass ratio for each of the vibration generating apparatuses, an field current of each of the vibration generating apparatuses and an amplification factor of a drive current application circuit configured to amplify a drive signal and supply the amplified drive signal to a drive coil, such that vibrations generated by the respective vibration generating apparatuses approach one another.

3. An overall control program for causing a computer to implement an overall control device for use in a vibration testing system for performing a vibration test with a test specimen fixed to vibration tables of a plurality of vibration generating apparatuses, the overall control program causing the computer to function as:
mass ratio acquisition means for acquiring, for each of the vibration generating apparatuses, a mass ratio of a movable portion including the vibration table to which the test specimen is fixed; and
control means for controlling, based on the mass ratio for each of the vibration generating apparatuses, an field current of each of the vibration generating apparatuses and an amplification factor of a drive current application circuit configured to amplify a drive signal and supply the amplified drive signal to a drive coil, such that vibrations generated by the respective vibration generating apparatuses approach one another.

4. The system according to claim 1, the device according to claim 2, or the program according to claim 3,
wherein, in an initial state, the mass ratio acquisition means supplies a DC current to the drive coil as the drive current so as to maintain the vibration table at a reference position, and calculates the mass ratio based on a value of the DC current.

5. The system according to claim 1, the device according to claim 2, or the program according to claim 3,
wherein the mass-ratio acquisition means acquires the mass ratio by calculating the mass ratio based on a shape and a mass of the test specimen, or by receiving the mass ratio as an external input.

6. The system according to claim 1 or the device according to claim 2,
wherein each of the vibration generating apparatuses further comprises a short-circuit switch configured to short-circuit both ends of the drive coil upon detection of an abnormal condition.

7. A vibration testing method for performing a vibration test with a test specimen fixed to vibration tables of a plurality of vibration generating apparatuses, the method comprising:
acquiring, for each of the vibration generating apparatuses, a mass ratio of a movable portion including the vibration table to which the test specimen is fixed; and
controlling, based on the mass ratio for each of the vibration generating apparatuses, an field current and an amplification factor of a drive current application circuit of each of the vibration generating apparatuses such that vibrations generated by the respective vibration generating apparatuses approach one another.
